# EUROPÄISCHE PATENTSCHRIFT

(11) **EP 0 728 657 B1**
(45) Veröffentlichungstag und Bekanntmachung des Hinweises auf die Patenterteilung: **12.08.1998**
(21) Anmeldenummer: 96102124.3
(22) Anmeldetag: 14.02.1996
(51) Int. Cl.: B62D 25/18

(54) **Radabdeckung**
Wheel cover
Panneau de couverture de roue

(30) Priorität: 22.02.1995 DE 19506098
(43) Veröffentlichungstag der Anmeldung: 28.08.1996
(73) Patentinhaber: Continental Aktiengesellschaft, 30165 Hannover (DE)
(72) Erfinder: Folchert, Uwe, Dr., D-30453 Hannover (DE); Dodt, Thomas, Dr. rer. nat., D-30455 Hannover (DE)

(56) Entgegenhaltungen:
- WO-A-93/12966
- DE-C- 4 241 518
- FR-A- 2 663 596
- GB-A- 2 043 006
- ENGINEERING (INCL. MACHINE SHOP MAGAZINE), Bd. 224, Nr. 9, Oktober 1984, LONDON GB, Seite 703 XP002015352 "Roads to efficiency"

## Beschreibung

Die Erfindung betrifft eine Radabdeckung an Rädern und/oder Achsen von Fahrzeugen, insbesondere Lastkraftwagen, mit einem fest am Fahrzeugrahmen befindlichen, als Radlaufkasten dienenden oberen Teil und mit daran verschwenkbar angebrachten unteren Bauteilen.

Radabdeckungen sind für die unterschiedlichsten Zwecke vorgesehen: Zur Verminderung der Gefährdung durch von Reifen hochgeschleuderte Steine oder Straßenschmutz, zur Verminderung des durch die Reifen auf nasser Fahrbahn erzeugten Sprühnebels, zur Verminderung der Gefährdung von Personen, von den Rädern überrollt zu werden, und zur Verminderung der Gefährdung der Reifen durch auf der Fahrbahn liegende Hindernisse.

Zur Erfüllung von gesetzlichen Vorschriften, zur Verbesserung der Aerodynamik, als Spritzschutz zur Verhütung von Eigen- und Fremdverschmutzung und Beschädigung und als Partnerschutz durch Verminderung von sichtbehindernden Sprühnebeln usw. ist aus der DE-PS 41 30 509 ein Radlauf an Achsen und Rädern von Kraftfahrzeugen mit einer den oberen Teil des Radlaufkastens abdeckenden stationären und einer dieser zugeordneten höhenverstelbaren Radlaufblende bekannt.
Diese höhenverstellbare Radlaufblende ist über ein am Radlaufboden befestigtes Gelenkviereck angelenkt. Die Verstellung erfolgt nicht automatisch sondern über ein Verstellelement, das von einem an der Achse befestigten Impulsgeber angesteuert wird. Diese verstellbare Blende befindet sich nicht vor und hinter den Rädern und/oder Achsen sondern lediglich an den äußeren Seiten der Räder. Die oben genannten Zweckbestimmungen - überfahrschutz usw. - werden von dieser Vorrichtung entweder gar nicht oder nur höchst unzulänglich verwirklicht.

In der DE-28 52 781 wird eine als Schmutzfänger bezeichnete Radabdeckung für Industriefahrzeuge beschrieben, die aus einem stabilen Stahlplattenteil und einem flexiblen Gummiteil besteht. Die Aufgabe dieser Vorrichtung ist in erster Linie in einem Schutz des Bedienpersonals zu sehen. Eine Verminderung der Gefährdung von Personen, von den Rädern überrollt zu werden, ist nicht das Ziel dieser Radabdeckung.

Insbesondere die mit dem Schutz von Verkehrsteilnehmern verbundene Problematik ist grundsätzlich neu.

Zwar ist in der DE-42 06 022 eine Aufprallvorrichtung für Nutzfahrzeuge mit einer Stoßstange für Kollisionen für Lastkraftwagen und einem darunter angeordneten Unterfahrschutz für Kollisionen mit Personenkraftwagen beschrieben. Dabei ist der Unterfahrschutz mit einem 4-Gelenk-Koppelgetriebe an der Stoßstange befestigt. Im Kollisionsfall mit einem PKW wird der Unterfahrschutz - unter Absorbierung von Aufprallenergie - zunächst auf einer nahezu horizontalen Bahn, die einer Knautschzone beim PKW entspricht, nach rückwärts geführt, um anschließend auf ganz kurzer Horizontalstrecke steil in eine hochgelegene Endposition geführt zu werden. Für Fahrten im Gelände erfolgt die Höhenverstellung nicht automatisch sondern muß vom Fahrer per Hand ausgelöst werden.

Schon wegen der steilen Anhebung der Aufprallvorrichtung im Kollisionsfall erscheint dieses Konstruktionsprinzip für den Fußgängerschutz ungeeignet.

Auch die in der DE-41 03 782 dargestellte Konstruktion ist für den Personenschutz ungeeignet. Der darin beschriebene Unterfahrschutz besteht im wesentlichen aus einem an der Unterseite der Stoßstange angeordneten Prallkörper, der erst im Falle einer Kollision der Stoßstange mit einem PKW oder dergleichen in eine den Abstand zur Fahrbahnebene verkleinernde Anschlagstellung geschwenkt wird.

Mit dieser Vorrichtung würde nicht nur eine auf der Fahrbahn liegende Person überrollt. Auch eine stehende Peson würde mangels der erforderlichen Stoßkraft ein Ausschwenken des Prallkörpers nicht auslösen können und ebenfalls unweigerlich umgefahren und überrollt werden.

Die in den bekannten Schriften DE-41 03 782 und DE-42 06 022 genannten Vorrichtungen sind lediglich für einen Schutz an den Vorderrädern beschrieben. Vor den weiteren Rädern, bzw. vor den weiteren Achsen, und hinter den Rädern, bzw. hinter den weiteren Achsen, ist gar kein Mittel vorgesehen. Beim Rückwärtsfahren und beim Rangieren ist deshalb (auch) keinerlei Personenschutz gegeben.

In dem französischen Dokument FR-A-26 63 596 ist eine Radabdeckung nach dem Oberbegriff der Ansprüche 1 und 2 offenbart. Bei dieser Radabdeckung handelt es sich um einen Spritzschutz nach Art eines Kotflügels. Der Spritzschutz besteht aus mindestens zwei Schalen oder Wandungen, die aneinander befestigt sind, oder wobei die eine von der anderen abnehmbar ist, und die gemeinsam den Kotflügel bilden. Die dem Rad zugewandte innere Schale trägt Mittel zur Führung und Sammlung des Spritzwassers. Die äußere Schale ist dicht, um als Mittel zur Ableitung des Wassers zu dienen, welches zwischen den beiden Schalen eingeschlossen ist und zu einer Entleerungsöffnung geleitet wird.
Gemäß der in Fig. 7 der FR-A-266 35 96 gezeigten Ausführungsform ist eine Spritzschutzvorrichtung vor und eine hinter dem Fahrzeugrad angebracht, wo sie mittels Gummibälgen elastisch an beiden Seiten eines über das Rad gewölbten Deckels befestigt sind.
Die in der FR-A-266 35 96 beschriebenen Vorrichtung dient lediglich der Wasserabweisung und nicht dem Personenschutz.

Die Aufgabe der vorliegenden Erfindung besteht in der Schaffung einer geländegängigen Radabdeckung mit geringem Bodenabstand, die nicht nur auf unebenen Straßen sondern auch unabhängig vom Beladungszustand des Fahrzeugs den oben genannten Zwecken gerecht wird.

Die erfingsgemäße Losung der Aufgabe ergibt sich aus den kennzeichnenden Teilen der Ansprüche 1 and 2. Vorteilhafte Weiterbildungen sind in den Unteransprüchen angegeben.

Wegen der automatischen Nachgiebigkeit der erfindungsgemäßen Bauteile braucht im Hinblick auf die Probleme beim Befahren unebenen Geländes und bei variierendem Beladungszustand des Fahrzeugs kein Kompromiß eingegangen zu werden, d. h. der Fahrbahnabstand der erfindungsgemäßen Bauteile kann sehr klein gewählt werden.

Die besondere Wirksamkeit für die verschiedenen Zwecke (Personenschutz, Sprühnebelverminderung, Schallschutz, usw.) ist wegen des sehr geringen Bodenabstands, der weniger als zwanzig Zentimeter beträgt, wesentlich besser als bei hoch angebrachten feststehenden Radabdeckungen. Bestände eine solche Radabdeckung aus feststehenden Bauteilen, so ergäbe sich beim Fahren oder Rangieren auf unebenem Gelände die Gefahr, daß die feststehenden Bauteile in Anbetracht des geringen Bodenabstands zerstört würden. Auch würde bei feststehenden Bauteilen die Höhenregulierung des Pritschenaufliegers bei Fahrzeugen mit einer Wechselpritsche und die Anpassung an die Höhe einer Entladerampe in unzumutbarer Weise eingeschränkt.

In Durchführung der Erfindung wird dieser Nachteil mit einer automatischen Verstellmöglichkeit aufgehoben, wobei die im Normalfall herunterragenden Bauteile im Kontaktfall auslenkbar sind.
Mit Hilfe dieser Verstellmöglichkeit schwenkt das Bauteil unter Belastung in und gegen Fahrtrichtung sowie bei Bodenkontakt automatisch nach oben.

Die erfindungsgemäße Radabdeckung ist so konzipiert, daß das Bauteil durch eine Fünfgelenkkonstruktion so vor und hinter dem Fahrzeugrad befestigt ist, und daß bei Kollisionen mit Hindernissen eine derartig definierte Ausweichbewegung ermöglicht wird, daß die Radabdeckung nicht in den Gefahrenbereich des drehenden Fahrzeugrades gelangen und beschädigt werden kann.

Alternativ kann an die Stelle der erfindungsgemäßen Fünfgelenkkonstruktion eine Aufhängung aus elastischem Material treten. Dadurch entfallen die mechanischen Gelenke; es wird eine einfache, robuste und kostengünstige Anbringung ermöglicht.

Um den Zwecken einer Verminderung des durch die Reifen erzeugten Sprühnebels auf nasser Fahrbahn und einer Verminderung der Gefährdung durch von Reifen hochgeschleuderte Steine zu genügen, weist die Radabdeckung einen Schichtaufbau auf, wobei die oberste radseitige Schicht den Sprühnebel vermindert und hochgeschleuderte Steine abbremst. Die nachfolgenden Schichten dienen der Schallabsorption und schützen vor Steinschlag.

Zum Zwecke der Sprühnebelverminderung ist die radseitige Oberfläche mit einem "Kunstrasen", teppichartigem Vlies, Kunststoffgeflecht, Kunstfasern oder Borsten (kurz als "Geflecht" bezeichnet) belegt.

Zum Zwecke der Schallabsorption ist diese oberste Schicht schalldurchlässig ausgebildet. Dabei kann es sich um ein sehr offenes Kunststoffgeflecht oder um eine Hintereinanderschaltung von offenporiger Deckschicht und nachfolgender Absorptionsschicht handeln, wobei diese erste Schicht so stabil ausgelegt ist, daß die dahinterliegende Schallabsorptionsschicht bei normaler Beanspruchung nicht beschädigt wird. Als normale Beanspruchung ist sowohl eine Reinigung mittels Dampfstrahlers als auch durch hochgeschleuderte Steine und darüber hinaus auch durch Regen, Schnee und Eis (gefrierender Regen) zu werten. Diese Schicht ist so stabil und dauerhaft konzipiert, daß eine Laufstreifenablösung des Reifens nicht zu einer Gefahrauslösenden Beschädigung der Radabdeckung führen kann.

Die schallabsorbierende Schicht kann als poröser Absorber (offenporiger Schaumstoff oder ähnliches) mit einer schalldurchlässigen Schutzschicht ausgebildet sein oder als luftschallabsorbierendes Formteil aus einem polymeren Werkstoff in Form von Helmholtz-, Loch- oder Plattenabsorbern, Silatoren oder aus einer Kombination dieser Wirkungsmechanismen bestehen.

Eine dritte Schicht, gebildet aus einer Rückwand mit einem seitlichen Abschluß und bestehend aus polymerem Material oder Metall, gibt der gesamten Konstruktion die nötige mechanische Festigkeit und bildet die Anlenkpunkte für die erfindungsgemäß automatische Verstellbarkeit der Einrichtung.

Insgesamt ist eine weitgehende Unabhängigkeit einer Sprühnebelverminderung, eines Personenschutzes usw. vom Gelände und vom Beladungszustand des Fahrzeugs gegeben.

Im folgenden wird die erfindungsgemäße Radabdeckung anhand zweier Ausführungsbeispiele beschrieben. Es zeigt:
Fig. 1a eine Prinzipdarstellung der erfindungsgemäßen Anordnung in Normalstellung;
Fig. 1b zeigt dieselbe Anordnung in ausgelenkter Stellung;
Fig. 2a zeigt eine Prizipdarstellung einer weiteren Ausführungsform, wobei die in Fig. 1 gezeigten Knickhebel durch elastische Lenker ersetzt sind;
Fig. 2b zeigt dieselbe Ausführungsform, aber statt in Normalstellung in ausgelenkter Stellung.

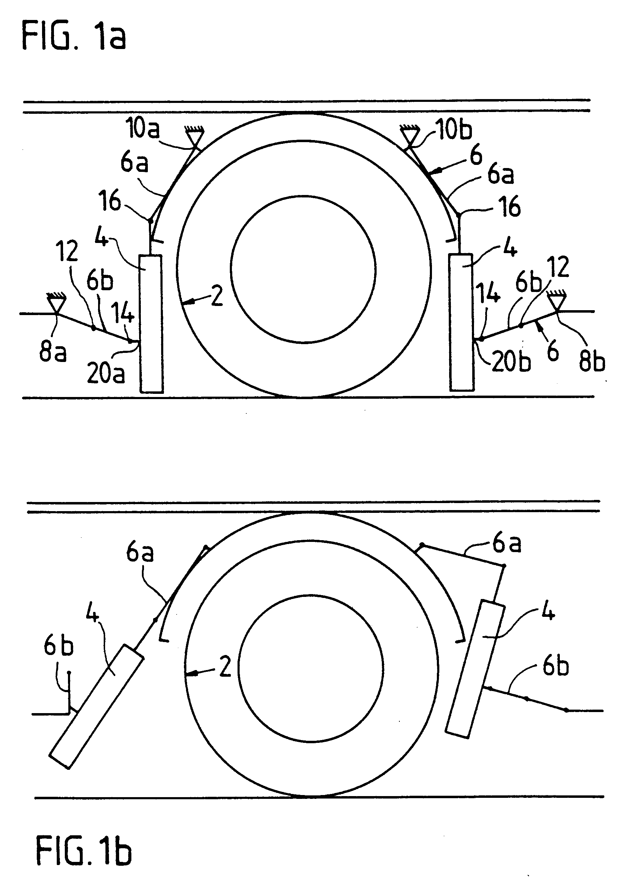

Die erfindungsgemäße Radabdeckung besteht im wesentlichen aus einem sowohl vor als auch hinter den Fahrzeugrädern 2, bzw. sowohl vor als auch hinter den Fahrzeugachsen angeordneten Bauteilen 4. Wie in der in Fig. 1 gezeigten Ausführungsform sind diese vor und hinter den Fahrzeugrädern 2 befindlichen Bauteile 4 zum Zwecke einer erfindungsgemäßen Verschwenkbarkeit durch eine Fünfgelenkkonstruktion 6 jeweils an einem seitlichen Befestigungspunkt 8a, 8b an der den Fahrzeugrädern 2 abgewandten Seite und an oberhalb der Bauteile 4 befindlichen oberen Befestigungspunkten 10a, 10b an dem Fahrzeugchassis befestigt. Darüber hinaus verfügt die Fünfgelenkkonstruktion 6 über die beweglichen Gelenkpunkte 12 und 14 an der dem Fahrzeugrad 2 abgewandten Seite und dem beweglichen Gelenkpunkt 16 oberhalb der Schmalseite des Bauteils 4. Bei Berührung mit einem Hindernis ergibt sich mit Hilfe der Fünfgelenkkonstruktion 6 eine Ausweichbewegung des Bauteils 4 in der Weise, daß die angefahrene Person oder der angefahrene Gegenstand nicht in den Gefahrenbereich des drehenden Fahrzeugrades 2 gelangt.

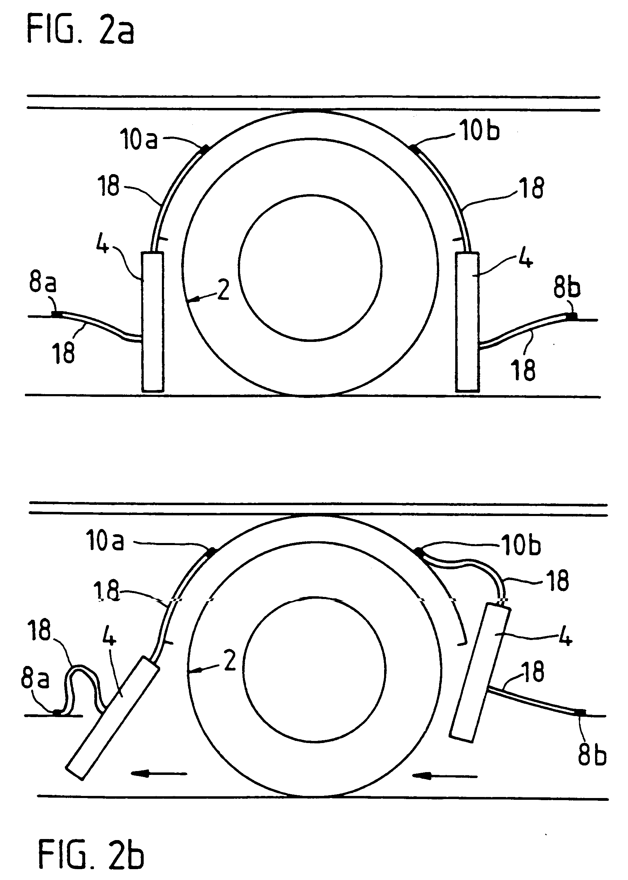

Wie in der in den Figuren 2a und 2b dargestellten Ausführungsform gezeigt, kann an die Stelle der Fünfgelenkkonstruktion 6 eine entsprechende Aufhängung 18 aus flexiblem oder elastischem Material treten.

In jedem Fall verfügt das als Radabdeckung dienende Bauteil 4 sowohl über ein Verbindungsglied 6a zwischen seiner Schmalseite und dem Fahrzeugchassis als auch über ein Verbindungsglied 6b zwischen seiner Breitseite und einem diesem zugeordneten Fahrzeugteil. Dabei kann das Bauteil 4 so gestaltet und insbesondere der Auslenkpunkt 20a, 20b der Verbindungskonstruktion 6b an dem Bauteil 4 so angeordnet sein, daß das Bauteil 4 erst bei einer vorgegebenen Belastung hochschwenkt.

Insgesamt sind die Anlenkpunkte 20a, 20b der Gelenkkonstruktion 6 so gewählt und die Verteilung der Grenzbelastung (d. h. der Belastung, bei welcher das Bauteil 4 wegschwenkt) so eingestellt, daß bei einer Belastung in Radrichtung eine höhere Kraft notwendig ist als bei einer Belastung vom Fahrzeugrad 2 zum Bauteil 4 oder senkrecht zur Fahrtrichtung aufwärts zum Bauteil 4 hin.

Wie aus den Abbildungen nicht hervorgeht, können die Bauteile 4 in einem Winkel α zur jeweiligen Fahrzeugachse aufgebaut sein.

## Patentansprüche

1. Radabdeckung an Rädern und/oder Achsen von Fahrzeugen, insbesondere von Lastkraftwagen,
mit einem fest am Fahrzeugrahmen befindlichen, als Radlaufkasten dienenden oberen Teil und mit zwei daran flexibel angebrachten unteren Bauteilen (4),
**dadurch gekennzeichnet**,
- daß die Bauteile (4) sowohl vor als auch hinter den Fahrzeugrädern (2), beziehungsweise sowohl vor als auch hinter den Fahrzeugachsen, in einem geringen Bodenabstand, der weniger als zwanzig Zentimeter beträgt, quer zur Fahrtrichtung angeordnet sind, und
- daß jedes der Bauteile (4), das heisst die Schutzvorrichtungen für jedes Fahrzeugrad (2), beziehungsweise für jede Fahrzeugachse, jeweils mit einer Fünfgelenkkonstruktion (6) gelenkig aufgehängt ist,
wobei die Fünfgelenkkonstruktion (6) an der oberen Schmalseite des Bauteils (4) ein einteiliges und an der dem Fahrzeugrad (2) abgewandten Seite ein zweiteiliges Verbindungsglied umfaßt,
wodurch jedes Bauteil (4) im Kontaktfall auslenkbar ist.

2. Radabdeckung nach dem Oberbegriff des Anspruchs 1,
**dadurch gekennzeichnet**,
- daß die Bauteile (4) sowohl vor als auch hinter den Fahrzeugrädern (2), beziehungsweise sowohl vor als auch hinter den Fahrzeugachsen, in einem geringen Bodenabstand, der weniger als zwanzig Zentimeter beträgt, quer zur Fahrtrichtung angeordnet sind, und
- daß jedes der Bauteile (4), das heisst die Schutzvorrichtungen für jedes Fahrzeugrad (2), beziehungsweise für jede Fahrzeugachse, sowohl an der oberen Schmalseite als auch an der dem Fahrzeugrad (2) abgewandten Seite mittels einer aus flexiblem oder elastischem Material bestehenden Aufhängung aufgehängt und im Kontaktfall auslenkbar ist.

3. Radabdeckung nach Anspruch 1,
**dadurch gekennzeichnet**,
daß die Bauteile (4) so gestaltet sind und daß die als Aufhängung ausgebildete Fünfgelenkkonstruktion (6) so angelenkt ist,
daß die Bauteile (4) erst bei bestimmter vorgegebener Belastung verschwenkbar sind.

4. Radabdeckung nach Anspruch 3,
**dadurch gekennzeichnet**,
daß die Verteilung der zum Verschwenken vorgegebenen Schwellenbelastung so gewählt ist,
daß bei einer Belastung in Radrichtung eine höhere Kraft zur Auslenkung notwendig ist als bei einer Belastung vom Fahrzeugrad (2) zu den Bauteilen (4) und/oder einer Belastung senkrecht zur Fahrtrichtung.

5. Radabdeckung nach einem der vorhergehenden Ansprüche 1 - 4,
**dadurch gekennzeichnet**,
daß die Bauteile (4) jeweils einen Schichtaufbau mit einer radseitigen obersten Schicht, die zwecks Sprühnebelverminderung aus einem stabilen Geflecht besteht oder mit einem stabilen Geflecht belegt ist,
wobei diese radseitige oberste Schicht zwecks Schalldurchlässigkeit offenporig ausgebildet ist; mit einer nachfolgenden Absorptionsschicht; und einer als stabile Rückwand ausgebildeten und mit Anlenkpunkten ausgestatteten dritten Schicht aufweisen.

6. Radabdeckung nach Anspruch 5,
**dadurch gekennzeichnet**,
daß die Absorptionsschicht ein poröser, mit einer schalldurchlässigen Schutzschicht versehener Absorber oder ein luftschallabsorbierendes Formteil aus einem polymeren Werkstoff in Form von Helmholtz-, Loch- oder Plattenabsorbern, Silatoren oder eine Kombination derartiger Absorber ist.

7. Radabdeckung nach einem der vorhergehenden Ansprüche 1 - 6,
**dadurch gekennzeichnet**,
daß die Bauteile (4) unter einem Winkel α zur Fahrzeugachse angeordnet sind.

## Claims

1. Wheel covering for wheels and/or axles of vehicles, more especially heavy goods vehicles, having an upper portion situated securedly on the vehicle frame and serving as the wheel housing box, and having two lower component parts (4), which are mounted flexibly thereon, characterised
- in that the component parts (4) are disposed transversely relative to the direction of travel both in front of and behind the vehicle wheels (2), or respectively both in front of and behind the vehicle axles, with a small ground clearance amounting to less than twenty centimetres, and
- in that each of the component parts (4), that is to say the protective devices for each vehicle wheel (2), or respectively for each vehicle axle, is pivotally suspended by means of a five-link construction (6),
the five-link construction (6) comprising a one-part connecting member at the upper narrow side of the component part (4) and a two-part connecting member on the side remote from the vehicle wheel (2),
whereby each component part (4) is deflectable in the event of making contact with some obstacle.

2. Wheel covering according to the preamble of claim 1, characterised
- in that the component parts (4) are disposed transversely relative to the direction of travel both in front of and behind the vehicle wheels (2), or respectively both in front of and behind the vehicle axles, with a small ground clearance amounting to less than twenty centimetres, and
- in that each of the component parts (4), that is to say the protective devices for each vehicle wheel (2), or respectively for each vehicle axle, is suspended both at the upper narrow side and at the side remote from the vehicle wheel (2) by means of a suspension which is formed from flexible or resilient material and is deflectable in the event of making contact with some obstacle.

3. Wheel covering according to claim 1, characterised in that the component parts (4) are so configured, and in that the five-link construction (6) which is configured as the suspension, is so pivotally mounted that the component parts (4) are only pivotable when there is a predetermined, prescribed loading.

4. Wheel covering according to claim 3, characterised in that the distribution of the threshold loading, which is prescribed for the pivotal movement, is so selected that, in the event of a loading in the direction of the wheel, a higher force is needed for the deflection than is needed in the event of a loading from the vehicle tyre (2) to the component parts (4) and/or in the event of a loading perpendicular to the direction of travel.

5. Wheel covering according to one of the preceding claims 1 - 4, characterised in that the component parts (4) each have a layered structure comprising an uppermost layer facing the wheel, which layer is formed from a stable mesh or is covered with a stable mesh for the purpose of reducing spray, this uppermost layer facing the wheel having an open-pored configuration for the purpose of sound permeability; comprising a subsequent absorption layer; and comprising a third layer which is configured as a stable rear wall and is provided with pivot points.

6. Wheel covering according to claim 5, characterised in that the absorption layer is a porous absorber, which is provided with a sound permeable protective layer, or is a moulded part, which absorbs airborne sound and is formed from a polymeric material in the form of Helmholtz absorbers, perforated absorbers or plate absorbers, silators or a combination of such absorbers.

7. Wheel covering according to one of the preceding claims 1 - 6, characterised in that the component parts (4) are disposed at an angle α relative to the vehicle axle.

## Revendications

1. Panneau de couverture de roue placé à proximité des roues et/ou des essieux de véhicules, en particulier de camions,
■ comprenant un élément supérieur se trouvant en position fixe sur le châssis du véhicule et servant de caisson de passage de roue, ainsi que deux composants inférieurs (4) montés souplement sur cet élément,
**caractérisé**
• en ce que les composants (4) sont disposés perpendiculairement à la direction de marche aussi bien devant que derrière les roues (2) du véhicule, respectivement aussi bien devant que derrière les essieux du véhicule à une faible distance au sol qui est inférieure à vingt centimètres et
• en ce que chacun des composants (4), c'est à dire les dispositifs de protection de chaque roue du véhicule (2), respectivement de chaque essieu du véhicule est suspendu dans chaque cas de manière articulée au moyen d'une construction (6) à cinq articulations,
■ la construction (6) à cinq articulations comprenant sur le côté étroit supérieur du composant (4) un organe d'assemblage en une pièce et, sur le côté tourné à l'opposé de celui de la roue (2) du véhicule, un organe d'assemblage en deux pièces,
■ de manière que chaque composant (4) puisse être dévié en cas de contact.

2. Panneau de couverture de roue selon le préambule de la revendication 1,
**caractérisé**
• en ce que les composants (4) sont disposés perpendiculairement à la direction de marche aussi bien devant que derrière les roues (2) du véhicule, respectivement aussi bien devant que derrière les essieux du véhicule à une faible distance au sol qui est inférieure à vingt centimètres et
• en ce que chacun des composants (4), c'est à dire les dispositifs de protection de chaque roue du véhicule (2), respectivement de chaque essieu du véhicule, est suspendu et peut être dévié en cas de contact aussi bien sur le côté étroit supérieur que sur le côté tourné à l'opposé de celui de la roue (2) du véhicule au moyen d'une suspension en matière souple ou élastique.

3. Panneau de couverture de roue selon la revendication 1,
**caractérisé**
• en ce que les composants (4) sont conçus, et en ce que la construction (6) à cinq articulations, qui est conformée en suspension, est articulée
• de manière que les composants (4) ne puissent subir un basculement que sous une charge prescrite prédéterminée.

4. Panneau de couverture de roue selon la revendication 3,
**caractérisé**
• en ce que la répartition de la charge de seuil prescrite pour le basculement est adoptée
• de manière que la force nécessaire à une déviation sous une charge orientée vers la roue soit supérieure à celle qui l'est sous une charge allant de la roue (2) du véhicule vers les composants (4) et/ou sous une charge qui est perpendiculaire à la direction de marche.

5. Panneau de couverture de roue selon l'une des revendications 1 à 4,
**caractérisé**
• en ce que chaque composant (4) présente une structure en couches comprenant une couche supérieure située côté roue, destinée à réduire le brouillard de fines gouttelettes, qui consiste en un treillis stable ou qui est revêtue d'un treillis stable, cette couche supérieure côté roue étant conformée à pores ouverts en vue de laisser passer le bruit ; une couche d'absorption suivante ; et une troisième couche conformée en paroi arrière stable et équipée de points d'articulation.

6. Panneau de couverture de roue selon la revendication 5,
**caractérisé**
• en ce que la couche d'absorption est un absorbeur poreux muni d'une couche de protection laissant passer le bruit ou une pièce moulée absorbant le bruit de l'air, en un matériau polymère ayant la forme d'absorbeurs de Helmholtz, perforés ou en plaques, de silateurs ou d'une combinaison de tels absorbeurs.

7. Panneau de couverture de roue selon l'une des revendications précédentes 1 à 6,
**caractérisé**
• en ce que les composants (4) sont disposés de manière à définir un angle α avec l'essieu du véhicule.
